# EUROPÄISCHE PATENTANMELDUNG

(11) **EP 3 142 225 A1**
(43) Veröffentlichungstag der Anmeldung: **15.03.2017**
(21) Anmeldenummer: 15184226.7
(22) Anmeldetag: 08.09.2015
(51) Int. Cl.: H02K 1/20, H02K 9/19

(54) **ELEKTRISCHE MASCHINE MIT KOPPLUNGEN IM KÜHLSYSTEM**

(71) Anmelder: Siemens Aktiengesellschaft, 80333 München (DE)
(72) Erfinder: Dorfner, Matthias, 84375 Kirchdorf am Inn (DE); Hodzic, Tarik, 81737 München (DE); Rützel, Matthias, 97618 Wülfershausen (DE)

(57) **Zusammenfassung**

Bei einer elektrischen Maschine (1) mit einem Blechpaket (4) befinden sich im Blechpaket (4) Kühlrohre (3), wobei Kopplungen (30,31,32,40,41,42) die Kühlrohre (3) verbinden, wobei ein erster Kopplungstyp (11) einen T-förmigen Abzweig aufweist, wobei insbesondere zwei Kopplungen(30,31,32,40,41,42) zwei benachbarte Kühlrohre (3) miteinander verbinden.

## Beschreibung

Die Erfindung betrifft eine elektrische Maschine mit einem Blechpaket. Um die Effizienz der elektrischen Maschine zu erhöhen wird diese gekühlt.

Aus der DE 198 13 160 A 1 ist eine Kühlvorrichtung für einen Elektromotor bekannt, welche eine Vielzahl von nach innen vorstehenden Statorpolen aufweist, die in Umfangsrichtung derart angeordnet sind, dass ein sich axial erstreckender Raum zwischen zwei benachbarten Statorpolen ausgebildet ist. Spulen sind auf den jeweiligen Statorpolen aufgewickelt. Dabei sind Kühleinrichtungen so angeordnet, dass sie in thermischem Kontakt mit ihren benachbarten Spulen stehen.

Aus der DE 10 2005 044 832 A1 ist eine elektrische Maschine mit einem Läufer und einem Stator bekannt, wobei der Läufer eine Welle aufweist und durch die Wellenachse die Längenausdehnung der elektrischen Maschine definiert ist und wobei die elektrische Maschine mittels eines Kühlkreislaufs kühlbar ist. Der Kühlkreislauf weist zumindest ein Kühlrohr auf, welches sich im Wesentlichen in Längenausdehnung der elektrischen Maschine erstreckt. Der Kühlkreislauf weist ferner ein erstes kreisformartiges, nicht ganz umlaufendes Verteilungsrohr auf, welches eine Ebene aufspannt, wobei die Achse der Längenausdehnung der elektrischen Maschine im Wesentlichen senkrecht zu dieser Ebene steht. Dabei ist zumindest ein Kühlrohr dicht mit dem ersten Verteilungsrohr verbindbar, wobei der Kühlkreislauf von einem Kühlmittel durchströmbar ist.

Eine Aufgabe der Erfindung ist es die Verwendung von Kühlrohren zur Kühlung einer elektrischen Maschine zu erleichtern.

Eine Lösung der Aufgabe ergibt sich bei einer elektrischen Maschine nach Anspruch 1 und bei einem Herstellungsverfahren für eine elektrische Maschine nach Anspruch 12. Weitere Ausgestaltungen der elektrischen Maschine bzw. des entsprechenden Herstellungsverfahrens ergeben sich nach den Ansprüchen 2 bis 11 bzw. 13 bis 16.

Kühlrohre einer elektrischen Maschine können mit Kopplungen verbunden werden. Die Kühlrohre befinden sich beispielsweise ganz, teilweise bzw. überwiegend in einem Blechpaket der elektrischen Maschine. Kupferrohre werden beispielsweise gebogen und in dafür im Blechpaket vorgesehene geeignete Nuten und oder Durchgänge angeordnet, oder es werden geeignete Normteile aus Kupfer oder einem anderen metallischen Material mit den Rohren verlötet. Das Blechpaket der elektrischen Maschine ist beispielsweise das Blechpaket eines Stators der elektrischen Maschine oder das Blechpaket eines Läufers der elektrischen Maschine. Da die Kopplungen Teil der Kühlung der elektrischen Maschine sind, sind dies Kühlelemente für diese. Die elektrische Maschine ist beispielsweise ein Elektromotor oder ein Generator. Elektrische Maschinen sind beispielsweise Synchronmaschinen oder Asynchronmaschinen. Die elektrische Maschine kann auch segmentiert sein. Der Stator einer segmentierten elektrischen Maschine weist Segmente auf, welche jeweils ein Blechpaket mit Kühlrohren aufweisen.

In einer Ausgestaltung der elektrischen Maschine mit einem Blechpaket, befinden sich im Blechpaket Kühlrohre. Das Blechpaket ist beispielsweise das Blechpaket eines Primärteils oder eines Sekundärteils. Das Primärteil ist beispielsweise ein Stator und das Sekundärteil beispielsweise ein Rotor bzw. Läufer. Die elektrische Maschine kann eine rotatorische Maschine oder eine Linearmaschine sein und als Motor bzw. als Generator betrieben werden. Die Kühlrohre sind beispielsweise aus einem Metall wie Kupfer, Eisen, Aluminium, einer Legierung, oder einem temperaturfesten Kunststoff. Durch die Kühlrohre kann man im Betrieb der elektrischen Maschine Kühlflüssigkeit fließen lassen. Mittels der Kopplungen lassen sich die Kühlrohre miteinander verbinden. Damit lässt sich eine Kühlsystem bzw. ein Kühlkreislauf aufbauen. Die Kopplungen können aus unterschiedlichen Materialen gefertigt sein, bzw. diese aufweisen. Kopplungen können insbesondere die gleichen Materialien wie die Kühlrohre aufweisen, oder auch davon unterschiedliche Materialen. Eine Kopplung aus Kunststoff ist beispielsweise preiswert herstellbar und die Formgebung ist auch einfach realisierbar.

Es gibt zumindest eine erste Kopplung eines ersten Kopplungstyps, welcher einen T-förmigen Abzweig bzw. eine T-förmige Form aufweist. Der erste Kopplungstyp ist T-förmig ausgeführt. Er weist also drei Öffnungen auf. Zur Verbindung von zwei Kühlrohren sind zumindest zwei Kopplungen notwendig. Diese zwei Kopplungen sind insbesondere direkt miteinander verbunden und jeweils direkt mit einem der beiden Kühlrohre. Zwei benachbarte Kühlrohre sind damit mittels zweier Kopplungen miteinander verbunden bzw. verbindbar.

Die Kopplungen stellen einen Teil des Kühlsystems der elektrischen Maschine dar und sind damit Kühlelement. Kühlelemente zur Verbindung von Kühlrohren einer elektrischen Maschine können einheitlich für verschiedene Baugrößen, insbesondere verschiedene Durchmesser und damit verschiedene Krümmungen, der elektrischen Maschine einsetzbar sein. Mit wenigen Typen von Kopplungen lassen sich demnach Kühlrohre unterschiedlicher Maschinenbaugrößen miteinander verbinden.

In einer Ausgestaltung der elektrischen Maschine sind die Kopplungen auf die Kühlrohre steckbar bzw. gesteckt. Dabei weist das Kühlrohr oder die Kopplung beispielsweise eine Dichtung auf, damit keine Kühlflüssigkeit austreten kann.

In einer Ausgestaltung der elektrischen Maschine sind die Kopplungen aufeinander steckbar bzw. gesteckt. Dabei weist zumindest eine der Kopplungen beispielsweise eine Dichtung auf, damit keine Kühlflüssigkeit austreten kann.

In einer Ausgestaltung der elektrischen Maschine weist der erste Kopplungstyp einen ersten Anschluss, einen zweiten Anschluss und einen dritten Anschluss auf. Die Anschlüsse können bezüglich ihres Typs gleichartig oder unterschiedlich ausgeführt sein. Ein Anschlusstyp ist beispielsweise eine Stechverbindung. Ein weiterer Anschlusstyp ist eine Schraubverbindung oder ein Flansch.

In einer Ausgestaltung der elektrischen Maschine weist der erste Kopplungstyp als Anschluss Steckverbindungen, insbesondere nur Steckverbindungen, auf. Stechverbindungen weisen eine Steckerseite und eine Buchsenseite auf. Damit ist der erste Kopplungstyp derart gestaltet, dass der erste Anschluss ein Steckanschluss ist und der zweite Anschluss ein Buchsenanschluss ist. So kann der Steckanschluss einer Kopplung in den Buchsenanschluss einer weiteren Kopplung gesteckt werden bzw. sein.

Der erste Anschluss der Kopplung, welche ein Kühlelement ist, kann auch als erste Seite (A-Seite) bezeichnet werden und der zweite Anschluss als zweite Seite (B-Seite), welche von der ersten Seite verschieden ist. Ein oder mehrere Kopplungen können darüber hinaus eine dritte Seite (C-Seite) aufweisen, in die ein Kühlrohr eingreift. Zwischen Kühlrohr und C-Seite befindet sich beispielsweise ein Dichtelement. Die dritte Seite betrifft einen dritten Anschluss. Die Anschlüsse eins, zwei und drei bilden eine Art T-Form aus.

In einer Ausgestaltung der elektrischen Maschine weist die Kopplung neben einem ersten Anschluss, einem zweiten Anschluss auch einen dritten Anschluss auf. Der dritte Anschluss ist beispielsweise ein Buchsenanschluss. Der dritte Anschluss kann beispielsweise auf ein Kühlrohr gesteckt werden. Der aufzusteckende Teil der Kopplung weist den Buchsenanschluss auf (dies ist z.B. der dritte Anschluss). Das Kühlrohr entspricht dem Steckeranschluss. Der Buchsenanschluss umschließt den Steckeranschluss zumindest teilweise.

In einer Ausgestaltung der elektrischen Maschine weist eine zweite Kopplung einen zweiten Kopplungstyp auf. Der zweite Kopplungstyp weist eine L-Form auf. Mit der L-Form ist also ein Winkelstück realisierbar. Das Winkelstück bzw. die Kopplung des Typs zwei hat zwei Anschlüsse. Der erste Anschluss der zweiten Kopplung schließt beispielsweise am Kühlrohr an und der zweite Anschluss der zweiten Kopplung an eine Kopplung des ersten Typs. Der erste Anschluss ist beispielsweise als Buchsenanschluss ausgeführt und der zweite Anschluss als Steckanschluss. Abhängig von der Ausgestaltung des Kühlsystems, der Kühlrohre und der unterschiedlichen Typen von Kopplungen, können die Anschlussarten (Steckanschluss/Buchsenanschluss) für die jeweiligen ersten, zweiten, dritten und weiteren Anschlüsse einer Kopplung auch anders gewählt sein.

In einer Ausgestaltung der elektrischen Maschine weist der zweite oder ein weiterer Kopplungstyp einen ersten Anschluss, einen zweiten Anschluss und einen dritten Anschluss auf. Die Anschlüsse können bezüglich ihres Typs gleichartig oder unterschiedlich ausgeführt sein. Ein Anschlusstyp ist beispielsweise eine Stechverbindung. Ein weiterer Anschlusstyp ist eine Schraubverbindung.

In einer Ausgestaltung der elektrischen Maschine weist der zweite oder weitere Kopplungstyp als Anschluss nur Steckverbindungen auf. Stechverbindungen weisen eine Steckerseite und eine Buchsenseite auf. Damit ist der zweite oder weitere Kopplungstyp derart gestaltbar, dass der erste Anschluss ein Steckanschluss ist und der zweite Anschluss ein Buchsenanschluss ist. So kann der Steckanschluss einer Kopplung in den Buchsenanschluss einer weiteren Kopplung gesteckt werden bzw. sein.

Die verschiedenen Kopplungen unterschiedlichen Typs können an bestimmten Positionen im Kühlsystem sein. Die Position ist insbesondere zumindest eine der Stirnseiten des Blechpaketes der elektrischen Maschine, wobei diese insbesondere eine rotierende elektrische Maschine ist.

In einer Ausbildung der elektrischen Maschine weist jede Kopplung eine direkte Verbindung, also einen direkten Anschluss, an zumindest ein Kühlrohr auf. Somit weist dann z.B. jede Kopplung der elektrischen Maschine als ein Kühlelement entweder nur eine A-Seite oder nur eine B-Seite aber stets eine C-Seite auf. Die C-Seite dient dem direkten Anschluss der Kopplung an das Kühlrohr.

In einer Ausgestaltung der elektrischen Maschine weist diese eine dritte Kopplung eines dritten Kopplungstyps auf. Der dritte Kopplungstyp weist eine L-Form. Mit der L-Form ist auch hier ein Winkelstück realisierbar. Das Winkelstück hat zwei Anschlüsse und kann Winkel von 0 Grad bis 360 Grad abdecken, wobei dabei die L-Form dann nicht immer erkennbar ist. Der erste Anschluss der dritten Kopplung des dritten Kopplungstyps schließt beispielsweise am Kühlrohr an und der zweite Anschluss der dritten Kopplung des dritten Typs an eine Kopplung des ersten Typs. Im Unterschied zur Kopplung des zweiten Typs weist der zweite Anschluss des dritten Typs im Fall einer Steckverbindung einen anderen Sterverbindungstyp wie bei der Kopplung des Typs zwei auf. Weist die Kopplung des Typs zwei eine Steckanschluss und einen Buchsenanschluss auf, so weist die Kopplung des Typs drei z.B. nur Buchsenanschlüsse auf und umgekehrt. Die Wahl von Steckanschluss und Buchsenanschluss bei den Anschlüssen der Kopplungen unterschiedlichen Typs ist nach den jeweiligen vorliegenden Erfordernissen zu treffen.

In einer Ausgestaltung der elektrischen Maschine ist die Anzahl der Kopplungen größer oder gleich der Anzahl der Kühlrohre. Durch die hohe Anzahl der Kopplungen ist es einfach alle Kühlrohre mit wenigen Typen von Kopplungen miteinander zu verbinden.

In einer Ausgestaltung der elektrischen Maschine weist diese Zähnen im bzw. am Blechpaket auf. Das Blechpaket weist also folglich Zähne auf. Die Anzahl der Kopplungen ist größer oder gleich der Anzahl der Zähne des Blechpaketes. Jedem Zahn kann auch ein Kühlrohr zugeordnet sein. Eine hohe Anzahl von Kühlrohren ermöglicht eine gute und gleichmäßige Kühlung des Blechpaketes.

In einer Ausgestaltung der elektrischen Maschine sind die Kopplungen zusammengesteckt. Die Kopplungen bilden bei einer rotatorischen elektrischen Maschine beispielsweise eine Ringstruktur oder auch nur ein Kreissegment aus. Steckverbindungen sind in der Fertigung einfach zu nutzen und gegenüber Schweißverbindungen nicht so arbeitsintensiv. Die Steckverbindungen können auch vergossen sein. Der Verguss trägt auch zur Dichtigkeit der Steckverbindungen bei.

In einer Ausgestaltung der elektrischen Maschine dichtet ein O-Ring die Verbindung zweier Kopplungen oder die Verbindung einer Kopplung und eines Kühlrohres ab.

In einer Ausgestaltung der elektrischen Maschine weisen unterschiedliche Kopplungen, dies sind Kopplungen gleichen Typs oder unterschiedlichen Typs, unterschiedliche Durchmesser auf. Damit kann die Durchflussmenge eingestellt werden. Die Durchflussmenge beeinflusst die Kühlleistung der unterschiedlichen Kühlrohre der elektrischen Maschine.

In einer Ausgestaltung der elektrischen Maschine weist die Verbindung zwischen Kühlrohr und Kopplung einen Dichtring und/oder eine Anschlagscheibe auf. Der Dichtring ist insbesondere in die Kopplung integriert, was eine einfache Montage ermöglicht.

In einer Ausgestaltung der elektrischen Maschine sind Kopplungen vergossen. Mit dem Verguss der Kopplungen kann beispielsweise auch ein Wickelkopf mit vergossen sein. Durch den Verguss kann nicht nur eine zusätzliche Abdichtung der Kopplungen untereinander bzw. der Kopplungen zu den Kühlrohren erreicht werden, sondern der Verguss kann auch zur Kühlung des Wickelkopfes beitragen.

Bein einem Verfahren zur Herstellung einer elektrischen Maschine werden auf Kühlrohre eines Blechpaketes Kopplungen zur Verbindung der Kühlrohre gesteckt. Durch die Verwendung von Steckverbindungen können Kühlrohre in einfacher Weise verbunden werden.

Mittels des Verfahrens kann eine elektrische Maschine der obig beschriebenen Art bzw. der im Fortgang beschriebenen Art hergestellt werden.

In einer Ausgestaltung des Verfahrens werden Kopplungen für unterschiedliche Durchflussmengen miteinander verbunden. Damit lässt sich die Kühlleistung anpassen. So ist die Kühlleistung abhängig von der Temperatur der Kühlflüssigkeit. Die Kühlflüssigkeit erwärmt sich jedoch je länger die Kühlflüssigkeit durch die Kühlrohre im Blechpaket fließt.

In einer Ausgestaltung des Verfahrens werden die Kopplungen vergossen. Dabei verschmelzen die Kopplungen im Bereich ihrer Steckverbindungen gemäß einer weiteren Ausgestaltung des Verfahrens. Durch das Verschmelzen kann eine erhöhte Sicherheit bei der Dichtigkeit erreicht werden.

In einer Ausgestaltung des Verfahrens wird der Wickelkopf des Stators der elektrischen Maschine zusammen mit den Kopplungen in einem Verguss vergossen. Der Verguss kann an das Blechpaket angrenzen, was die Stabilität erhöht.

Die Erfindung sowie weitere vorteilhafte Ausgestaltungen der Erfindung gemäß den Merkmalen der Unteransprüche werden im Folgenden anhand von schematisch dargestellten Ausführungsbeispielen in den Zeichnungen beispielhaft näher erläutert, ohne dass dadurch eine Beschränkung der Erfindung auf diese Ausführungsbeispiele erfolgt. Es zeigen:
- FIG 1: eine elektrische Maschine;
- FIG 2: ein Blechpaket mit Kühlrohren;
- FIG 3: eine erste Kopplung eines ersten Kopplungstyps;
- FIG 4: eine zweite Kopplung eines zweiten Kopplungstyps;
- FIG 5: eine dritte Kopplung eines dritten Kopplungstyps;
- FIG 6: zusammengesteckte Kopplungen ;
- FIG 7: zusammengesteckte Kopplungen im Schnitt;
- FIG 8: eine Detaildarstellung von zusammengesteckten Kopplungen im Schnitt; und
- FIG 9: ein Kühlrohr im Blechpaket im Schnitt.

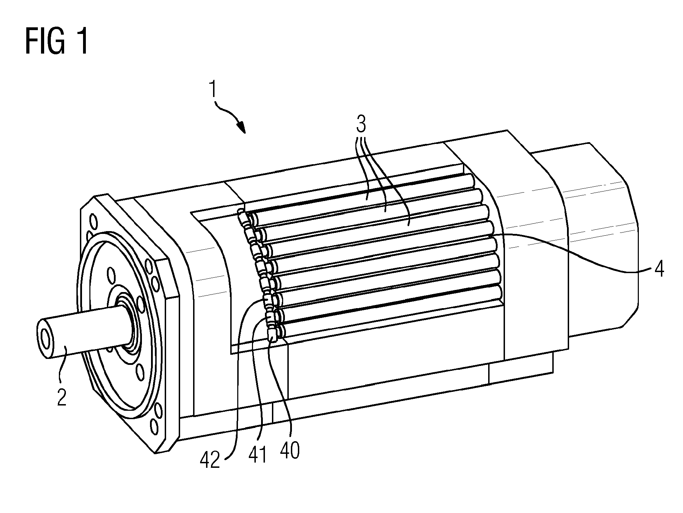

Die Darstellung nach FIG 1 zeigt eine elektrische Maschine 1 mit einer Welle 2 und einer Vielzahl von Kühlrohren 3 im Blechpaket 4. Die Kühlrohre 3 sind über Kopplungen 40, 41, 42, etc. miteinander verbunden und Teil eines Kühlsystems der elektrischen Maschine 1.

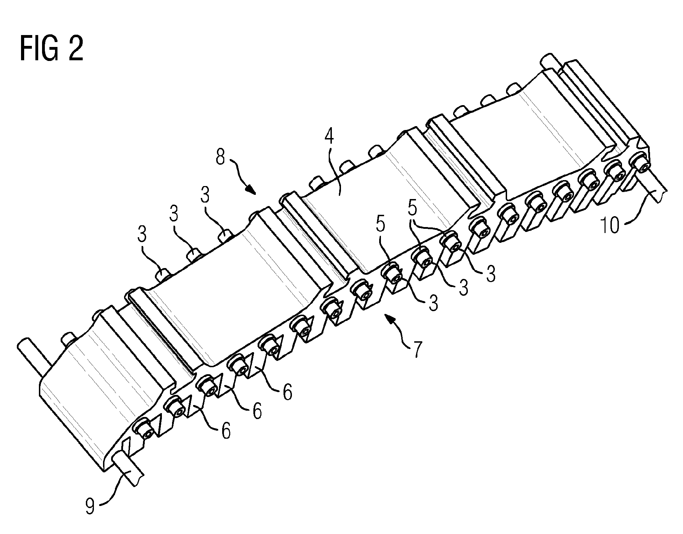

Die Darstellung nach FIG 2 zeigt ein Blechpaket 4 einer elektrischen Maschine mit Zähnen 6 und einer Vielzahl von Kühlrohren 3. Das Blechpaket 4 nach FIG 2 ist Teil eines Segmentmotors bzw. Generators. Das Blechpaket 4 weist eine erste Stirnseite 7 und eine zweite Stirnseite 8 auf. Im Bereich der Stirnseiten 7 und 8 befinden sich auf den Kühlrohren 3 Anschlagscheiben 5. Auf die Anschlagscheiben 5 können Kopplungen gesetzt werden, welche in FIG 2 allerdings nicht dargestellt sind. Das dargestellte Segmentteil mit dem Blechpaket 4 weist auch Montagehilfen 9 und 10 auf.

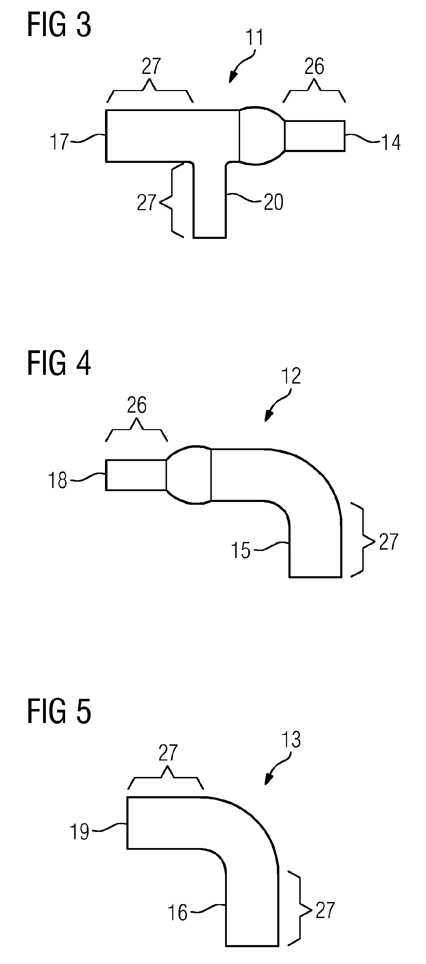

Auf die Kühlrohre 3 sind Kopplungen 11, 12 und 13 unterschiedlichen Typs steckbar, welche in den Figuren 3 bis 5 einzeln dargestellt sind.

Die Darstellung nach FIG 3 zeigt eine erste Kopplung eines ersten Kopplungstyps 11. Diese Kopplung des ersten Typs weist einen ersten Anschluss 14 auf, welcher ein Steckanschluss 26 ist. Die Kopplung weist ferner einen zweiten Anschluss 17 auf, welcher ein Buchsenanschluss 27 ist. In dem Buchsenanschluss 27 kann ein Steckanschluss 26 einer weiteren nicht dargestellten Kopplung gesteckt werden, da der Durchmesser des Buchsenanschlusses 27 größer ist als der Durchmesser des Steckanschlusses 26. Die Kopplung des ersten Typs 11 weist ferner einen dritten Anschluss 20 auf. Der dritte Anschluss 20 ist ein Buchsenanschluss 27. In diesen kann ein Kühlrohr gesteckt werden, welches in FIG 3 allerdings nicht dargestellt ist. Die drei Anschlüsse 14, 17 und 20 bilden einen T-förmigen Abzweig für Kühlflüssigkeit aus.

Die Darstellung nach FIG 4 zeigt eine zweite Kopplung eines zweiten Kopplungstyps 12. Diese Kopplung des zweiten Typs 12 weist einen ersten Anschluss 15 auf, welcher ein Buchsenanschluss 27 ist. Diese Kopplung weist ferner einen zweiten Anschluss 18 auf, welcher ein Steckanschluss 26 ist. Der Buchsenanschluss 27 ist zum Anschluss an ein Kühlrohr vorgesehen. Hat das Kühlrohr einen kleineren Durchmesser als der Anschluss der Kopplung, so wäre das Kühlrohr der Steckanschluss. Der zweite Anschluss 18 des Typ zwei ist zum Anschließen einer weiteren Kopplung beispielsweise des Typs 1 vorgesehen. Der zweite Kopplungstyp 12 hat eine L-Form.

Die Darstellung nach FIG 5 zeigt eine dritte Kopplung eines dritten Kopplungstyps 13. Diese Kopplung des dritten Typs weist wie der Kopplungstyp 2 zwei Anschlüsse 16 und 19 auf. Der erste Anschluss 16 des dritten Kopplungstyps 13 ist ein Buchsenanschluss 27. Dies trifft auch auf den zweiten Anschluss 19 des dritten Kopplungstyps 13 zu. Zumindest einer der Buchsenanschlüsse ist und zum Anschluss an ein Kühlrohr vorgesehen. Der dritte Kopplungstyp 13 hat auch eine L-Form.

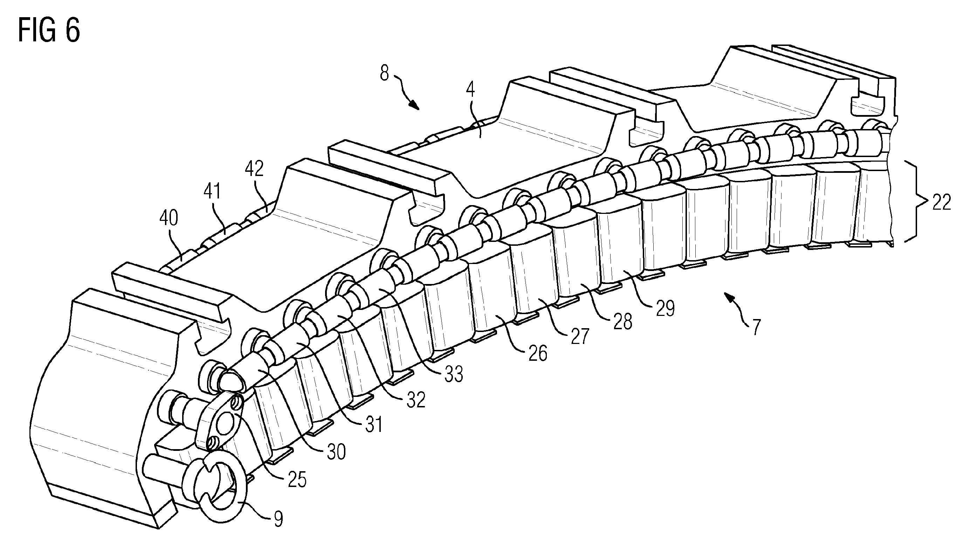

Die Darstellung nach FIG 6 zeigt ein Blechpaket 4 mit einer Vielzahl von Spulen 26, 27, 28, 29. Durch die Vielzahl von Spulen 26, 27, 28, 29 bildet sich auf den Stirnseiten 7 und 8 des Blechpaketes 4 jeweils ein Wickelkopf 22 aus. Durch das Blechpaket 4 sind Kühlrohre geführt, welche in FIG 6 nicht dargestellt sind. Die Kühlrohre werden über Kopplungen 30, 31, 32, 40, 41, 42 derart miteinander verbunden, dass durch diese eine Kühlflüssigkeit geführt werden kann. Wie in FIG 6 gezeigt, sind wenigstens zwei Kopplungen 30, 31 auf benachbart zueinander angeordneten Kupferrohren angebracht. Über einen Kühlflüssigkeitsanschluss 25 werden die Kühlrohre mit Kühlflüssigkeit gespeist. Die Kopplung 30 ist vom Kopplungstyp drei (siehe FIG 5). Mit der Kopplung 30 ist die Kopplung 31 verbunden. Die Kopplung 31 ist vom Kopplungstyp 1 (siehe FIG 3). Die Kopplung 32 ist mit der Kopplung 31 verbunden. Auch die Kopplung 32 ist vom Kopplungstyp 1.

Die Kopplungen 30, 31, 32, 33, 40, 41, 42 sind Teil des Kühlsystems und somit Kühlelemente. Diese Kühlelemente dienen der Verbindung von Kühlrohren einer elektrischen Maschine und können einheitlich für verschiedene Baugrößen elektrischer Maschinen verwendet werden. Dies betrifft insbesondere verschiedene Durchmesser und damit verschiedene Krümmungen, so dass Kopplungen gleicher Größe und gleichen Typs bei elektrischen Maschinen unterschiedlicher Größe und Form einsetzbar sind.

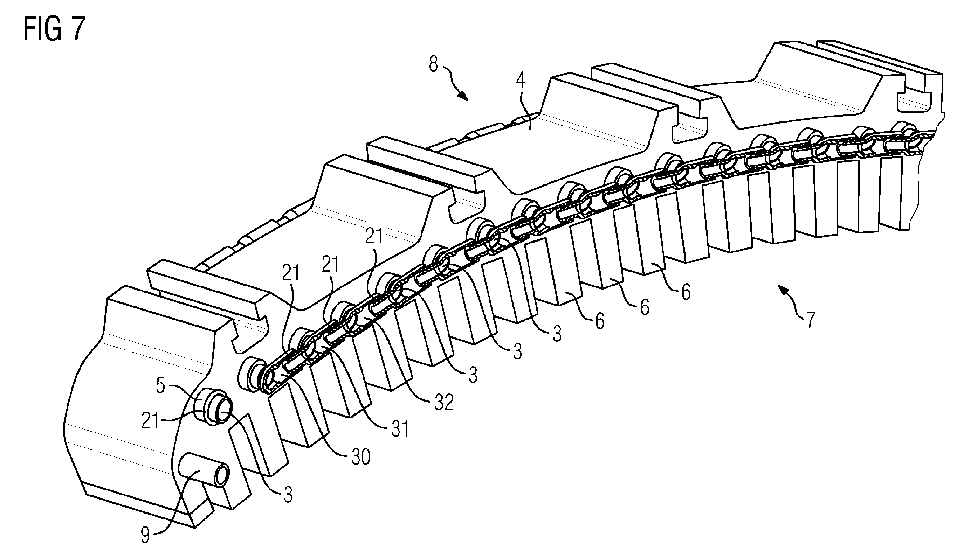

Die Darstellung nach FIG 7 zeigt ähnlich wie FIG 6 ein Blechpaket 4 mit Stirnseiten 7 und 8, wobei in FIG 6 die Spulen nicht dargestellt sind. Im Vergleich zu FIG 6 sind in FIG 7 die Kopplungen 30, 31, 32 auf der Stirnseite 7 geschnitten dargestellt. So lässt sich leichter erkennen, dass die Kopplungen teilweise unterschiedlichen Typs sind. Die Kühlrohre 3 ragen in die Kopplungen 30, 31 und 32 rein. Die Kopplung 30 ist vom Typ 3. Die Kopplungen 32 und 32 sind vom Typ 1. Beim Kühlflüssigkeitsanschluss sind auf das Kühlrohr 3 eine Anschlagscheibe 5 und eine Dichtung 21 gesteckt. Nach FIG 7 sind wenigstens zwei Kopplungen auf benachbart zueinander angeordneten Kupferrohren 3 angebracht. Dabei greift die B-Seite eines der beiden Kühlelemente in die A-Seite des anderen Kühlelements (Kopplung). Der Hohlraum in den Kühlelementen, in denen das Kühlmedium fließt, ist gegenüber der Umgebung zwischen der A-Seite des einen Kühlelements und der B-Seite des anderen Kühlelements mit wenigstens einem Kühlelement abgedichtet. Das Dichtelement d.h. die Dichtung 21 kann ein 0-Ring sein. Das Dichtelement 21 befindet sich insbesondere zentriert angeordnet in einer Rundung am Ende der B-Seite des Kühlelements. Vermittels dieser Rundung können mehrere zueinander benachbart angeordnete Kühlelemente in einer

Achse fluchtend oder bis zu einer bestimmten Krümmung gebogen angeordnet werden, ohne dass die Dichtwirkung des wenigstens einen Kühlelements in der Rundung der B-Seite der Kühlelemente verloren geht. Die Kühlrohre 3 können aus Kupfer oder beliebigen anderen geeigneten Materialen sein bzw. bestehen. Die Kühlelemente können aus Messung, aus Spritzguss-Material oder beliebigen anderen geeigneten Werkstoffen gefertigt sein. Für eine Serienfertigung ist aus Gründen der Wirtschaftlichkeit eine Anfertigung aus Spritzgussmaterialien möglich. Die in den Rundungen der B-Seiten der Kühlelemente angeordneten Dichtungen 21 ermöglichen die Abdichtung benachbarter Kühlelemente, d.h. Kopplungen, für verschiedene Krümmungen des Kühlsystems unter Verwendung gleicher Kühlelemente. Dadurch wird ein kostensparendes Baukastensystem ermöglicht.

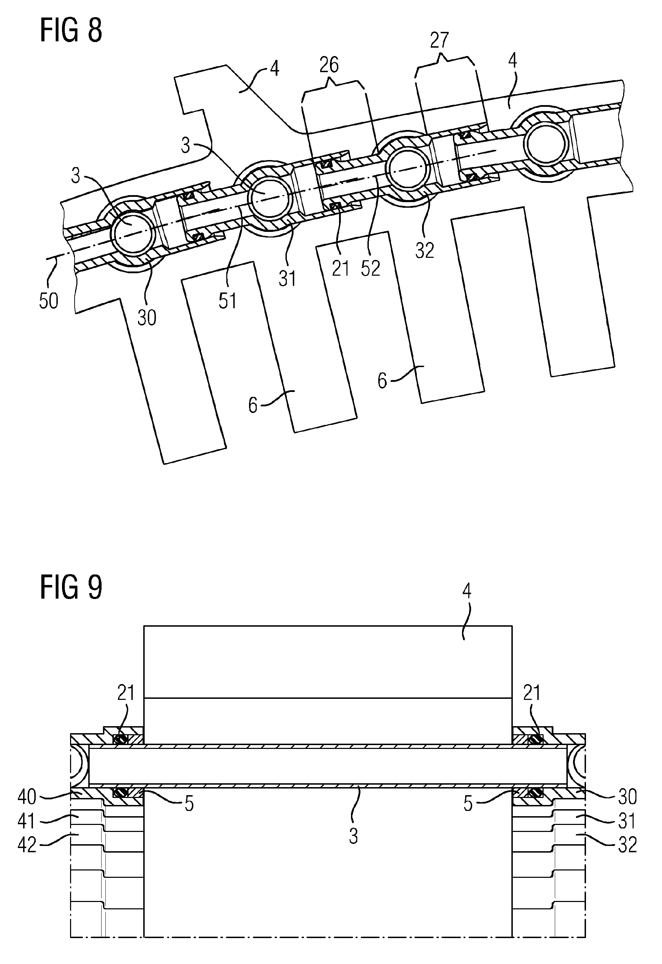

Die Darstellung nach FIG 8 zeigt eine Detaildarstellung aus FIG 7. Jede Kopplung 30, 31 und 32 weist eine Orientierungsachse 50, 51 und 52 auf. Diese Achsen verlaufen nicht parallel. Es gibt einen Winkelversatz der verdeutlicht, dass mit den Kopplungen eine Kreisstruktur ausgebildet werden kann. Durch die vergrößerte Darstellung wird auch ersichtlich, wie Steckanschlüsse 26 und Buchsenanschlüsse 27 ineinander greifen.

Die Darstellung nach FIG 9 zeigt ein Kühlrohr 3 im Blechpaket 4 im Schnitt. Auf das Kühlrohr 3 aus Kupfer sind stirnseitig 7, 8 Kopplungen 30 und 40 gesteckt. Diese sind mit weiteren Kopplungen 31, 32 bzw. 41, 42 verbunden. Die Abdichtung der Kopplungen 30 und 40 erfolgt mittels der Dichtungen 21. Zur Positionierung der Dichtungen 21 dienen Anschlagscheiben 5.

## Patentansprüche

1. Elektrische Maschine (1) mit einem Blechpaket (4), wobei im Blechpaket (4) Kühlrohre (3) sind, wobei Kopplungen (30,31,32,40,41,42) die Kühlrohre (3) verbinden, wobei ein erster Kopplungstyp (11) einen T-förmigen Abzweig aufweist, wobei insbesondere zwei Kopplungen (30,31,32,40,41,42) zwei benachbarte Kühlrohre (3) miteinander verbinden.

2. Elektrische Maschine (1) nach Anspruch 1, wobei der erste Kopplungstyp (11) einen ersten Anschluss (14), einen zweiten Anschluss (17) und einen dritten Anschluss (20) aufweist, wobei der erste Anschluss (14) ein Steckanschluss (26) ist und der zweite Anschluss (17) ein Buchsenanschluss (27) ist.

3. Elektrische Maschine (1) nach Anspruch 2, wobei der dritte Anschluss (20) ein Buchsenanschluss ist.

4. Elektrische Maschine (1) nach einem der Ansprüche 1 bis 3, wobei eine zweite Kopplung einen zweiten Kopplungstyp (12) aufweist, wobei der zweite Kopplungstyp (12) eine L-Form aufweist.

5. Elektrische Maschine (1) nach einem der Ansprüche 1 bis 4, wobei die Anzahl der Kopplungen (30,31,32,40,41,42) größer oder gleich der Anzahl der Kühlrohre (3) ist.

6. Elektrische Maschine (1) nach einem der Ansprüche 1 bis 5, mit Zähnen (6) im Blechpaket (4), wobei die Anzahl der Kopplungen (30,31,32,40,41,42) größer oder gleich der Anzahl der Zähne (6) des Blechpaketes (4) ist.

7. Elektrische Maschine (1) nach einem der Ansprüche 1 bis 6, wobei die Kopplungen (30,31,32,40,41,42) zusammengesteckt sind.

8. Elektrische Maschine (1) nach einem der Ansprüche 1 bis 7, wobei 0-Ringe (21) die Kopplungen (30,31,32,40,41,42) abdichten.

9. Elektrische Maschine (1) nach einem der Ansprüche 1 bis 8, wobei unterschiedliche Kopplungen (30,31,32,40,41,42) unterschiedliche Durchmesser aufweisen.

10. Elektrische Maschine (1) nach einem der Ansprüche 1 bis 9, wobei die Verbindung zwischen Kühlrohr (3) und Kopplung (30,31,32,40,41,42) einen Dichtring (21) und/oder Anschlagscheibe (5) aufweisen.

11. Elektrische Maschine (1) nach einem der Ansprüche 1 bis 10, wobei Kopplung (30,31,32,40,41,42) vergossen sind.

12. Verfahren zur Herstellung einer elektrischen Maschine (1) wobei auf Kühlrohre (3) eines Blechpaketes (4) Kopplungen (30,31,32,40,41,42) zur Verbindung der Kühlrohre (3) gesteckt werden.

13. Verfahren nach Anspruch 12, wobei eine elektrische Maschine (1) nach einem der Ansprüche 1 bis 11 hergestellt wird.

14. Verfahren nach Anspruch 12 oder 13, wobei Kopplungen (30,31,32,40,41,42) für unterschiedliche Durchflussmengen miteinander verbunden werden.

15. Verfahren nach einem der Ansprüche 12 bis 14, wobei die Kopplungen (30,31,32,40,41,42) vergossen werden.

16. Verfahren nach einem der Ansprüche 12 bis 15, wobei der Wickelkopf (22) des Stators vergossen wird.
